# EUROPÄISCHE PATENTSCHRIFT

(11) **EP 0 443 051 B1**
(45) Veröffentlichungstag und Bekanntmachung des Hinweises auf die Patenterteilung: **21.04.1993**
(21) Anmeldenummer: 90103093.2
(22) Anmeldetag: 17.02.1990
(51) Int. Cl.: B29B 17/00, B29B 17/02, B29C 67/14, B29K 101/10, B29K 105/06, B29K 67/00

(54) **Verfahren zur Herstellung einer duroplastischen Pressmasse aus Glasfaser-Polyester-Verbundwerkstoff; Vorrichtung zur Durchführung des Verfahrens**
Method of producing a glass-fibre polyester composite thermosetting moulding material and apparatus for carrying out the process
Procédé de fabrication d'une matière à mouler thermodurcissable composite en fibres de verre-polyester et dispositif de réalisation du procédé

(43) Veröffentlichungstag der Anmeldung: 28.08.1991
(73) Patentinhaber: FIBRON Gesellschaft mit beschränkter Haftung, D-75015 Bretten (DE)
(72) Erfinder: Bartkowski, Klaus-Dieter, D-7519 Oberderdingen 2 (DE); Wesslein, Michael, Dr., D-6833 Waghäusel (DE); Mischo, Harald, D-7519 Wössingen (DE); Kühfusz, Rudolf, D-7519 Gondelsheim (DE)
(74) Vertreter: Durm, Frank, Dipl.-Ing.

(56) Entgegenhaltungen:
- WO-A-89/09123
- DE-A- 2 437 331
- DE-A- 2 542 423
- DE-A- 2 642 955
- DE-C- 3 717 277
- FR-A- 2 280 492
- US-A- 4 184 829

## Beschreibung

Die vorliegende Erfindung betrifft ein Verfahren zur Herstellung einer duroplastischen Prellmasse aus Glasfaser-Polyester-Verbundwerkstoff, insbesondere SMC, BMC oder DMC, unter Verwendung von Abfallteilen aus verprelltem SMC, BMC oder DMC. Ferner bezieht sich die Erfindung auf eine Vorrichtung zur Durchführung des Verfahrens.

Kunststoffe sind biologisch nicht abbaubar; sie kumulieren sich aus diesem Grunde in der Umwelt. Neben der Deponie, die aufgrund der guten Umweltverträglichkeit für die meisten Kunststoffe in der Regel unproblematisch ist, kommen zur gezielten Entsorgung die Verbrennung zu Zwecken der Energiegewinnung oder die Wiederverwertung in Frage. Bei der chemischen Wiederverwertung wird der Kunststoffabfall mittels Pyrolyse oder Hydrolyse in seine chemischen Bestandteile zerlegt, welche dann wieder als Grundstoffe zur Synthese neuer Kunststoffe zur Verfügung stehen. Eine Alternative hierzu ist das stoffliche Recycling, also die direkte Wiederverwendung von Kunststoffen ohne chemische Umwandlung.

Stoffliches Recycling wird heute bereits bei Thermoplasten, die den größten Teil der Kunststoffe ausmachen, durchgeführt. Dabei werden Kunststoff-Abfälle, die möglichst sortenrein vorliegen sollten, zu neuen Produkten oder Granulat umgeschmolzen. Auch mehrmaliges Umschmelzen ist möglich, sofern man Qualitätseinbullen in Kauf nimmt.

Großflächige Formteile für den Industrieeinsatz, beispielsweise bei Automobilen, werden aus Glasfaser-Polyester-Verbundwerkstoffen hergestellt. Grundstoff für diese hochwertigen Produkte sind duroplastische Prellmassen, die aus ungesättigten Polyester-Harzen, verstärkenden Textilglasfasern sowie Füll- und Zuschlagsstoffen zusammengesetzt sind. In Pressen härten diese Formmassen unter Druck und Temperatur durch Polymerisation rasch und vollständig aus. Die zu verpressende Formmasse kann als flächenförmige SMC-Harzmatte (Sheet Moulding Compound), auch Prepregs genannt, oder als teigige Formmasse, BMC (Bulk Moulding Compound) oder DMC (Dough Moulding Compound) genannt, vorliegen.

Aufgrund der Irreversibilität der Aushärtung stehen Duroplaste im Ruf, prinzipiell nicht recyclingfähig zu sein. Es wurde bereits versucht, Abfälle aus glasfaserverstärkten Duroplasten chemisch aufzuschließen. Diese Methoden haben sich jedoch bisher ebensowenig durchgesetzt wie eine Pyrolyse von SMC-Abfallteilen, welche wegen der relativ hohen Anteile langer Glasfasern verfahrenstechnische Probleme bringt. Hinsichtlich einer stofflichen Wiederverwendung wurde bisher lediglich vorgeschlagen, ausgehärtete Duroplast-Formteile fein zu vermahlen und das so gewonnene Regenerat als Füllstoff in neue Formmasse einzuarbeiten. Ein Überblick über den Stand der Technik bei der Abfallverwertung und Entsorgung härtbarer Formmassen bzw. ausgehärteter Formteile findet sich in Becker/Braun, Kunststoff-Handbuch 10, Duroplaste, 1988, Seiten 153 bis 155. Die Veröffentlichung "Kunststoff-Recycling", herausgegeben vom Gesamtverband Kunstoffverarbeitende Industrie e.V. (GKV), 2. Ausgabe 1989/90, Hanser Verlag München, enthält eine Literaturübersicht zum stofflichen Recycling von Kunststoffen.

In der DE-A-2 542 423 ist die Verwertung von Abfällen von Verbundprodukten aus textilem Fasermaterial und thermoplastisch verarbeitbarem Kunststoff, beispielsweise PVC, beschrieben. Die Abfälle werden geschnitzelt und mit zerkleinertem PVC gemischt. Nach dem Zusetzen von Hilfsstoffen erfolgt ein Plastifizieren und Durcharbeiten, zum Beispiel in einem Extruder oder in einer Zahnscheibenmühle, wobei erhebliche Wärme entsteht. Nach dem Abkühlen wird die erhaltene Masse granuliert.

Die FR-A-2 280 492 befaßt sich mit der Aufarbeitung von gemischten Plastik-Abfällen. Diese werden zunächst zerkleinert, um anschließend darin enthaltene Metallteile auszusondern. Sodann werden die Abfallschnitzel mittels Schwerkraft sortiert und schließlich einer physikalischen und chemischen Behandlung unterworfen. Das Verfahren soll sich insbesondere für Folien und Verpackungsmaterial aus Polyvinyl, Polyaethylen, Polystyren sowie ABS-Kunststoffen eignen.

Schließlich betrifft die WO-A-89 09123 die Verwertung von nicht ausgehärteten Prepreg-Abfällen. Diese werden zunächst tiefgekühlt und anschließend in einer Mühle zerkleinert. Aus den Schnitzeln wird schließlich eine Faserverbundwerkstoff-Masse hergestellt.

Eine stoffliche Wiederverwendung verprellter Formteile aus ausgehärtetem duroplastischem Kunststoff unter Rückgewinnung der Rohstoffe unter Beibehaltung deren technischer Eigenschaften ist aus dem vorbekannten Stand der Technik jedoch nicht bekannt.

Aufgabe der vorliegenden Erfindung ist es somit, ein Verfahren zur Herstellung einer duroplastischen Prellmasse anzugeben, bei dem Abfallteile aus verprelltem, also ausgehärteten SMC, BMC oder DMC der vollen stofflichen Wiederverwendung zugeführt werden. Es soll ferner eine entsprechende Vorrichtung zur stofflichen Wiederverwertung von ausgehärteten Glasfaser-Polyester-Verbundwerkstoffen unter gleichzeitiger Herstellung neuer duroplastischer Prellmasse angegeben werden.

Bei der auf die Angabe eines Verfahrens gerichteten Aufgabe wird ausgegangen von einem herkömmlichen Verfahren zur Herstellung einer duroplastischen Prellmasse, bei dem Glasfasern mit flüssiger Harzpaste unter Zugabe von Füllstoffen getränkt und anschließend zu einem härtbaren Glasfaser-Polyester-Verbundwerkstoff, insbesondere in Form von SMC, BMC oder DMC, verdichtet und homogenisiert werden.

Gelöst wird die Aufgabe unter Verwendung von Abfallteilen aus verprelltem SMC, BMC oder DMC dadurch, daß in einem ersten Verfahrensabschnitt die Abfallteile zerschlagen werden, wobei die Glasfaser-Polyester-Verbundstruktur entlang der Glasfasern mechanisch aufgebrochen wird, anschließend die rückgewonnenen Glasfasern von der pulverigen Recycling-Fraktion abgetrennt und sowohl die rückgewonnenen Glasfasern als auch die pulverige Recycling-Fraktion jeweils getrennt einer speziellen Oberflächenbehandlung durch Aufbringen von Schlichten bzw. Zumischen von Netzmitteln unterzogen werden, und in einem zeitlich späteren zweiten Verfahrensabschnitt die pulverige Recycling-Fraktion als zumindest teilweiser Ersatz für Original-Füllstoff in die Harzpaste eingearbeitet und die recyclierten und oberflächenbehandelten Glasfasern als zumindest teilweiser Ersatz anstelle von Original-Glasfasern zugegeben werden.

Bei der Zerkleinerung der Abfallteile ist wichtig, daß die Glasfaser-Polyester-Struktur nicht zerschnitten, sondern entlang der Glasfasern aufgebrochen wird. Dies geschieht erfindungsgemäß durch Zerschlagen mittels eines Schlagwerks. Nur so gelingt es, die einzelnen Glasfasern weitgehend unzerstört wiederzugewinnen. Vorteilhaft erfolgt das Zerschlagen in einer Hammermühle.

Nach der Abtrennung der rückgewonnenen Glasfasern von der übrigen pulverigen Recycling-Fraktion, beispielsweise mittels eines Rüttelsiebes, ist es vorteilhaft, wenn die pulverige Recycling-Fraktion zusätzlich bis herunter zu einer Korngröße von unter 500 Mikrometern feingemahlen wird.

Die rückgewonnenen Glasfasern und die erhaltene pulverige Recycling-Fraktion müssen jeweils separat oberflächenbehandelt werden.

Ziel der Oberflächenbehandlung der Glasfasern ist es, deren optimale Verarbeitungs- und Verstärkungseigenschaften wiederherzustellen. Dies geschieht vorwiegend mit organischen Additiven, sogenannten Schlichten. Als besonders wirkungsvoll hat sich diese Oberflächenbehandlung erwiesen, wenn nacheinander Filmbildner, Gleitmittel und Haftvermittler aufgetragen werden. Als Filmbildner eignen sich beispielsweise Stärke oder spezielle filmbildende Kunststoffe. Als Gleitmittel kommen Öle, Fette und Paraffine in Betracht. Besonders bevorzugt werden Haftvermittler auf Chrom- und/oder Silan-Basis, also beispielsweise Chrommethacrylat-Komplexsalze, wie Vinylsilane, Aminosilane und Methacrylsilane.

Um die feingemahlene pulverige Recycling-Fraktion später als Füllstoff bei der Herstellung neuer Formmasse einsetzen zu können, muß auch sie einer direkten oder indirekten Oberflächenbehandlung mit Additiven unterzogen werden, welche später eine verbesserte Benetzbarkeit des Pulvers mit dem flüssigen Polyester-Harz bewirkt. Als Additive kommen hier Methacrylsilane, Salze ungesättigter Fettsäurepolyaminamide, saure Polyester, ungesättigte Polycarbonsäuren oder Polysiloxan-Copolymere in Frage. Im Falle der direkten Oberflächenbehandlung werden diese Additive in einem geeigneten organischen Lösungsmittel, beispielsweise in kurzkettigen Alkoholen oder Ketonen, gelöst und auf die pulverige Recycling-Fraktion aufgetrommelt.

Als besonders vorteilhaft hat es sich herausgestellt, in einem ersten Verfahrens-Teilschritt zunächst die Netzmittel mit neuem Original-Füllstoff zu vermischen und in einem anschließenden zweiten Verfahrens-Teilschritt dann den die Netzmittel bereits enthaltenden Original-Füllstoff mit unbehandelter pulveriger Recycling-Fraktion zu vermischen.

Alternativ kann die Oberflächenbehandlung der pulverigen Recycling-Fraktion auch indirekt erfolgen, wobei die Netzmittel in der Harzpaste gelöst werden und ihre benetzende Wirkung erst dann entfalten, wenn die Recycling-Fraktion später als Füllstoff bzw. Füllstoff-Ersatz in die flüssige Harzpaste eingearbeitet wird.

Unabhängig davon, ob die Oberflächenbehandlung der pulverigen Recycling-Fraktion direkt oder indirekt erfolgt, wird diese in einem weiteren Verfahrensschritt in die neu angesetzte Harzpaste eingearbeitet. Dabei kann die aus Abfallteilen gewonnene pulverige Recycling-Fraktion den ansonsten benötigten Original-Füllstoff, beispielsweise Kreide, zu einem mehr oder weniger grollen Teil ersetzen.

Analog hierzu werden im nächsten Verfahrensschritt die getrennt oberflächenbehandelten recyclierten Glasfasern zugegeben, wobei der Anteil von neuen Original-Glasfasern entsprechend reduziert werden kann.

Zur optimalen Erfassung der Füllstoff- und Polymerteilchen der pulverigen Recycling-Fraktion werden in vorteilhafter Weiterbildung des erfindungsgemäßen Verfahrens spezielle Kombinationen von Detergenzien, insbesondere Alkylarylsulfonate und/oder Fettalkohol-Ethylenoxid-Addukten, zur Harzpaste zugesetzt.

Um eine bessere Tränkung der recyclierten Glasfasern und der pulverigen Recycling-Fraktion zu erreichen, erfolgt deren Einarbeitung bzw. Zugabe in die Harzpaste bevorzugt bei erhöhter Temperatur von mindestens 35 Grad Celsius.

Bei der Wiederverwertung größerer und schwererer Abfallteile ist es zweckmäßig, diese zunächst in einem vorgeschalteten Verfahrensschritt zu kleinformatigen Bruchstücken vorzuzerkleinern und anschließend die erhaltenen Bruchstücke in der beschriebenen Weise mechanisch aufzubrechen.

In Versuchsreihen hat sich herausgestellt, daß sich nach dem erfindungsgemäßen Verfahren duroplastische Prellmassen hoher Qualität herstellen lassen, die zwischen 10 und 40 Gewichtsprozent rückgewonnene pulverige Recycling-Fraktion und bis zu 40 % recyclierte Glasfasern und nur noch einen entsprechend reduzierten Anteil von Original-Füllstoffen und neuen Original-Glasfasern aufweisen. Es ist gelungen, SMC-Harzmatten mit einem Recyclat-Anteil von bis zu 65 % herzustellen. Dabei weichen die technischen Daten der aus Recycling-SMC geprellten Formteile nur unwesentlich von denen der Original-Teile ab, aus denen sie teilweise hergestellt wurden, und weisen eine ebenso gute Lackierfähigkeit auf.

Mit dem erfindungsgemäßen Verfahren ist es also gelungen, Abfallteile aus verprelltem SMC, BMC oder DMC durch Aufbrechen der typischen Glasfaser-Polyester-Verbundstrukturen so aufzubereiten, daß die rückgewonnenen Regenerate, also Glasfasern und Pulver, bei der Herstellung von neuen, im Idealfall sogar denselben Formteilen, wiedereingesetzt werden können. Sowohl bei der Produktion anfallender Abfall als auch nach jahrelangem Gebrauch zu Müll gewordene Formteile, beispielsweise aus verschrotteten Kraftfahrzeugen, lassen sich auf diese Weise in einem geschlossenen Kreislauf wieder zu hochwertigen Formteilen verpressen.

Die technischen Prämissen zum Recycling von glasfaserverstärkten Duroplasten sind somit durch die vorliegende Erfindung erfüllt.

Bei der auf die Angabe einer Vorrichtung gerichteten Aufgabe wird ausgegangen von einer herkömmlichen Vorrichtung zur Herstellung duroplastischer Preßmassen aus Glasfaser-Polyester-Verbundwerkstoff, mit einer Misch- und Rührstation für die Zubereitung der Harzpaste und einer Imprägnierstation zur Einarbeitung der Glasfasern durch Tränkung mit der Harzpaste.

Gelöst wird diese Aufgabe durch ein Schlagwerk, das die Glasfaser-Polyester-Struktur der Abfallteile aus verprelltem SMC, BMC oder DMC mechanisch aufbricht, durch eine Trennvorrichtung zum Absondern der rückgewonnenen Glasfasern von der pulverigen Recycling-Fraktion, ferner durch einen ersten Auffangbehälter für die rückgewonnenen Glasfasern, einen zweiten Auffangbehälter für die pulverige Recycling-Fraktion, eine erste Misch- und Dosiereinrichtung zum Aufbringen von Schlichten auf die Oberfläche der rückgewonnenen Glasfasern, eine zweite Misch- und Dosiereinrichtung zum Zumischen von Netzmitteln zur pulverigen Recycling-Fraktion, sowie wenigstens eine erste Zugabeeinrichtung für die Zugabe von pulveriger Recycling-Fraktion, welche an der Misch- und Rührstation und/oder der Imprägnierstation vorgesehen ist, und schließlich durch eine an der Imprägnierstation vorgesehene zweite Zugabeeinrichtung für die Zugabe von recyclierten Glasfasern.

Bevorzugt ist das Schlagwerk eine Hammermühle, in der die Glasfaser-Polyester-Struktur der Abfallstücke entlang den Glasfasern aufgebrochen wird.

In Weiterbildung der erfindungsgemäßen Vorrichtung ist zusätzliche eine Abscheideeinrichtung zum Aussondern von Metallteilen, beispielsweise ein Magnetabscheider, hinter dem Schlagwerk vorgesehen.

Als Trennvorrichtung zum Absondern der rückgewonnenen Glasfasern von der pulverigen Recycling-Fraktion hat sich ein Rüttelsieb besonders bewährt.

An die Trennvorrichtung kann sich eine zusätzliche Feinmahlstufe anschließen, in der die abgetrennte pulverige Recycling-Fraktion bis zu einer Korngröße von unter 500 Mikrometern feingemahlen wird.

Gegebenenfalls ist vor dem Schlagwerk zusätzlich ein Shredder vorzusehen, in dem größere Abfallteile zunächst zu kleinformatigen Bruchstücken vorzerkleinert werden.

Verfahrensmäßig hat es sich als vorteilhaft erwiesen, die benötigten Netzmittel nicht direkt der pulverigen Recycling-Fraktion, sondern dem später zugemischten Original-Füllstoff zuzusetzen. Hierzu muß die bei der erfindungsgemäßen Vorrichtung vorgesehene zweite Misch- und Dosiereinrichtung zweckmäßig einen ersten Mischer mit Dosierer zur Einarbeitung der Netzmittel in den Original-Füllstoff und einen zweiten Mischer zur Vermischung des die Netzmittel dann bereits enthaltenden Original-Füllstoffs mit der pulverigen Recycling-Fraktion umfassen.

Für die Zugabe von spezifischen chemischen Zusätzen in die Harzpaste kann eine weitere, an der Misch- und Rührstation vorzusehende Dosiereinrichtung erforderlich sein.

Besonders bevorzugt wird eine Ausführung, bei der die Imprägnierstation im Bereich der Tränkzone mit einer Heizung ausgerüstet ist, so daß die Tränkung mit Harzpaste bei erhöhter Temperatur erfolgen kann.

Das hier vorgeschlagene Verfahren zur stofflichen Wiederverwertung von glasfaserverstärkten Duroplasten läßt sich zeitlich, örtlich und räumlich trennen in einen ersten Verfahrensabschnitt, der die Rückgewinnung der in den Abfallteilen enthaltenen Glasfasern und die Aufbereitung der pulverigen Restfraktion umfaßt, sowie einen zweiten Verfahrensabschnitt, der die Herstellung neuer duroplastischer Preßmassen aus frischem Harzansatz und den wiedergewonnenen Grundstoffen, nämlich Glasfaser und pulveriger Recycling-Fraktion, umfaßt.

Dementsprechend läßt sich auch die erfindungsgemäße Vorrichtung zur Durchführung des Verfahrens räumlich aufteilen in eine Wiederaufbereitungsanlage und eine Produktionsanlage. Dabei umfaßt die Wiederaufbereitungsanlage alle diejenigen Einrichtungen, die zur Rückgewinnung und Aufbereitung der in den Abfallteilen enthaltenen Grundstoffe, nämlich Glasfaser und pulverige Recycling-Fraktion, erforderlich sind. Die Produktionsanlage umfaßt dagegen die zur Herstellung von duroplastischer Preßmasse auch nach herkömmlichen Verfahren benötigten Vorrichtungen, wie Misch- und Rührstation für Harzpaste und Imprägnierstation, sowie zusätzlich diejenigen spezifischen Einrichtungen, die durch die Wiederverwendung der aus Abfallteilen gewonnenen Recyclate bedingt sind.

Es ist durchaus denkbar, daß die Wiederaufbereitung der Abfallteile und die Produktion neuer Formmasse auch organisatorisch getrennt von zwei verschiedenen Unternehmen vorgenommen wird.

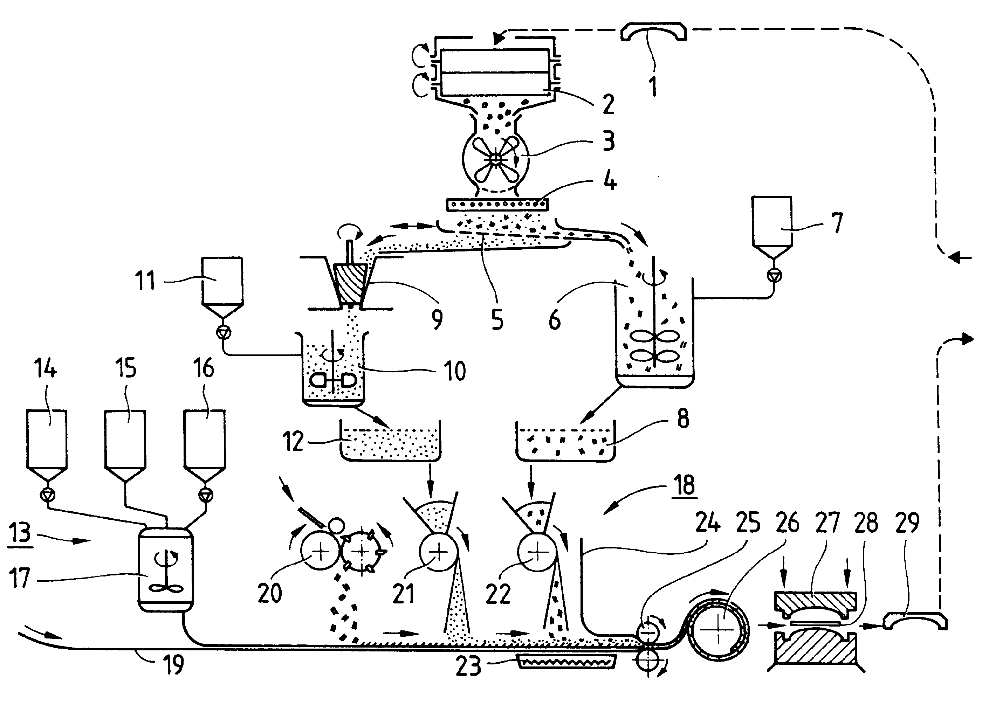

Nachstehend wird das erfindungsgemäße Verfahren und die zugehörige Vorrichtung anhand der beigefügten Zeichnung beispielhaft näher erläutert. Die einzige Abbildung zeigt schematisch die Wiedergewinnung und Aufbereitung von Glasfasern und pulveriger Recycling-Fraktion aus verpreßten SMC-Formteilen sowie die Herstellung einer neuen SMC-Harzmatte unter Verwendung der gewonnenen Recyclate.

Ein Abfallteil 1 aus verpreßtem SMC, das dem Recycling zugeführt werden soll, wird zunächst in einem Shredder 2 vorzerkleinert. Die Bruchstücke gelangen in ein Schlagwerk 3, das die Glasfaser-Polyester-Verbundstruktur entlang der Glasfasern mechanisch aufbricht. Eventuell in dem Abfallteil 1 bzw. den Bruchstücken enthaltene Metallteile, beispielsweise Befestigungselemente, werden mittels eines Metallabscheiders 4 ausgesondert. Ein nachfolgend angeordnetes Rüttelsieb 5 trennt die rückgewonnenen Glasfasern von der pulverigen Recycling-Fraktion ab.

Die abgesonderten Glasfasern werden in einen ersten Mischer 6 gegeben. Über eine erste Dosiereinrichtung 7 werden Filmbildner, Gleitmittel und Haftvermittler auf die Oberfläche der rückgewonnenen Glasfasern aufgebracht. Anstelle des einen Mischers 6 mit Dosiereinrichtung 7 können gegebenenfalls auch mehrere aufeinanderfolgende Mischer und eine entsprechende Anzahl von Dosiereinrichtungen zum zeitlich aufeinanderfolgenden Auftragen verschiedener Schlichten vorgesehen sein. Die oberflächenbehandelten und somit für eine Wiederverwendung zur Verfügung stehenden Glasfasern werden in einem ersten Auffangbehälter 8 zwischengelagert.

Die aus dem Rüttelsieb 5 ausgetragene pulverige Recycling-Fraktion wird in einer Feinmahlstufe 9 bis zu einer Korngröße von unter 500 Mikrometern feinvermahlen. Das feine Pulver wird anschließend in einen zweiten Mischer 10 gegeben. Über eine zugehörige zweite Dosiereinrichtung 11 werden der pulverigen Recycling-Fraktion Netzmittel zugemischt. Gegebenenfalls sind anstelle des einen Mischers 10 mit Dosiereinrichtung 11 mehrere Mischer mit zugehörigen Dosiereinrichtungen vorzusehen. Die somit oberflächenbehandelte pulverige Recycling-Fraktion wird in einem zweiten Auffangbehälter 12 zwischengelagert.

Shredder 2, Schlagwerk 3, Metallabscheider 4, Rüttelsieb 5, die beiden Mischer 6 und 10 mit zugehörigen Dosiereinrichtungen 7 und 11 sowie ferner die Feinmahlstufe 9 und die beiden getrennten Auffangbehälter 8 und 12 bilden eine Wiederaufbereitungsanlage zur Rückgewinnung von Rohstoffen aus Abfallteilen 1.

Die zur Herstellung von neuen SMC-Harzmatten erforderliche Produktionsanlage kann sich unmittelbar an die Wiederaufbereitungsanlage anschließen oder räumlich davon getrennt sein.

Eine Misch- und Rührstation 13 für die Zubereitung von Harzpaste umfaßt einen Tank 14, der flüssiges Harz enthält, einen Behälter 15 für Füll- und Zuschlagsstoffe, eine Dosiereinrichtung 16 für chemische Zusätze sowie einen Rührmischer 17, in dem die frische Harzpaste angerührt wird.

Die eigentliche Herstellung der SMC-Harzmatte erfolgt in einer Imprägnierstation 18. Aus dem Rührmischer 17 entnommene Harzpaste wird auf eine dünne Trägerfolie 19 mittels eines (nicht dargestellten) Rakels flächig aufgetragen. In einem Roving-Schneidwerk 20 wird Endlos-Glasfaser in ca. 2,5 cm lange Stücke geschnitten, die von oben auf bzw. in die flüssige Harzpaste fallen. Es schließt sich eine erste Zugabeeinrichtung 21 an, mittels der pulverige Recycling-Fraktion, die aus Abfallteilen 1 wiedergewonnen wurde, in einer gleichmäßigen dünnen Schicht aufgestreut wird. Über eine zweite Zugabeeinrichtung 22 werden zuletzt recyclierte Glasfasern, die ebenfalls aus Abfallteilen 1 wiedergewonnen wurden, aufgestreut. Die Tränkzone der Imprägnierstation 18 ist mit einer Heizung 23 ausgerüstet, so daß die Einarbeitung der pulverigen Recycling-Fraktion und die Zugabe der recyclierten Glasfasern bei erhöhter Temperatur von mindestens 35 Grad Celsius erfolgt. Nach oben hin wird die Harzmatte durch eine dünne Deckfolie (24) aus Polyethylen abgedeckt. Nach dem Durchlaufen von Verdichterwalzen 25 wird das feuchte SMC zu einem Harzmatten-Wickel 26 aufgerollt. Vor der Weiterverarbeitung muß das SMC bei Raumtemperatur eine gewisse Reifezeit gelagert werden.

Das Recycling-SMC, welches einen hohen Anteil von aus Abfallteilen 1 wiedergewonnenen Recyclaten hat, wird in einer Presse 27 weiterverarbeitet. Hierzu werden vom Harzmatten-Wickel 26 SMC-Stücke abgeschnitten und zu einem Harzmattenpaket 28 aufeinander geschichtet. In der geschlossenen Presse 27 härtet das SMC unter Druck und Temperatur zum gewünschten SMC-Formteil 29 aus. Eben dieses SMC-Formteil 29 kann später als Abfallteil 1 wieder in den Recycling-Kreislauf zurückgegeben werden.

### Verzeichnis der Bezugsziffern

- 1: Abfallteil
- 2: Shredder
- 3: Schlagwerk
- 4: Metallabscheider
- 5: Rüttelsieb
- 6: erster Mischer (für Glasfasern)
- 7: erste Dosiereinrichtung (für Schlichten)
- 8: erster Auffangbehälter (für Glasfasern)
- 9: Feinmahlstufe
- 10: zweiter Mischer (für Pulver)
- 11: zweite Dosiereinrichtung (für Netzmittel)
- 12: zweiter Auffangbehälter (für Pulver)
- 13: Misch- und Rührstation
- 14: Tank (für Harz)
- 15: Behälter (für Füllstoffe)
- 16: Dosiereinrichtung (für Zusätze)
- 17: Rührmischer (für Harzpaste)
- 18: Imprägnierstation
- 19: Trägerfolie
- 20: Roving-Schneidwerk
- 21: erste Zugabeeinrichtung (für Recycling-Pulver)
- 22: zweite Zugabeeinrichtung (für Recycling-Glasfasern)
- 23: Heizung
- 24: Deckfolie
- 25: Verdichterwalzen
- 26: Harzmatten-Wickel
- 27: Presse
- 28: Harzmattenpaket
- 29: SMC-Formteil

## Patentansprüche

1. Verfahren zur Herstellung einer duroplastischen Preßmasse aus Glasfaser-Polyester-Verbundwerkstoff, insbesondere SMC, BMC oder DMC, unter Verwendung von Abfallteilen aus verpreßtem SMC, BMC oder DMC, umfassend die Verfahrensschritte:
a) Zerschlagen der Abfallteile, wobei die Glasfaser-Polyester-Verbundstruktur entlang der Glasfasern mechanisch aufgebrochen wird;
b) Trennen in rückgewonnene Glasfasern und pulverige Recycling-Fraktion;
c) getrennte Oberflächenbehandlung der rückgewonnenen Glasfasern durch Aufbringen von Schlichten;
d) getrennte Oberflächenbehandlung der pulverigen Recycling-Fraktion durch Zumischen von Netzmitteln;
e) Einarbeitung der pulverigen Recycling-Fraktion als den Original-Füllstoff zumindest teilweise ersetzenden Recycling-Füllstoff in die Harzpaste;
f) Zugabe der recyclierten Glasfasern als zumindest teilweiser Ersatz von Original-Glasfasern;
g) Verdichten und Homogenisieren der so entstandenen Mischung zur gewünschten Preßmasse.

2. Verfahren nach Anspruch 1, dadurch **gekennzeichnet**, daß die Trennung in Glasfasern und pulverige Recycling-Fraktion durch Sieben erfolgt.

3. Verfahren nach Anspruch 1 oder 3, **gekennzeichnet** durch zusätzliches Feinmahlen der abgetrennten pulverigen Recycling-Fraktion bis zu einer Korngröße von unter 500 Mikrometern.

4. Verfahren nach einem der Ansprüche 1 bis 3, dadurch **gekennzeichnet**, daß die Oberflächenbehandlung der recyclierten Glasfasern durch das aufeinanderfolgende Auftragen von Filmbildnern, Gleitmitteln und Haftvermittlern erfolgt.

5. Verfahren nach Anspruch 4, **gekennzeichnet** durch die Verwendung von Stärke oder Kunststoff-Filmen als Filmbildner.

6. Verfahren nach Anspruch 4 oder 5, **gekennzeichnet** durch die Verwendung von Ölen, Fetten oder Paraffinen als Gleitmittel.

7. Verfahren nach einem der Ansprüche 4 bis 6, **gekennzeichnet** durch die Verwendung von Chromkomplexsalzen oder Silanen als Haftvermittler.

8. Verfahren nach einem der Ansprüche 1 bis 7, dadurch **gekennzeichnet**, daß die Oberflächenbehandlung der pulverigen Recycling-Fraktion durch Zumischung eines oder mehrerer Additive aus einer der nachfolgenden Stoffgruppen erfolgt:
- Methacrylsilane;
- Salze ungesättigter Fettsäurepolyaminamide;
- ungesättigte Polycarbonsäuren;
- Polysiloxan-Copolymere.

9. Verfahren nach Anspruch 8, dadurch **gekennzeichnet**, daß die Additive zum Zwecke des Auftrags vorübergehend in einem organischen Lösungsmittel gelöst werden.

10. Verfahren nach Anspruch 8 oder 9, **gekennzeichnet** durch die Oberflächenbehandlung der pulverigen Recycling-Fraktion in den aufeinanderfolgenden Verfahrens-Teilschritten:
d1) Zugabe der Netzmittel zu neuem Original-Füllstoff;
d2) anschließende Vermischung des die Netzmittel enthaltenden Original-Füllstoffs mit unbehandelter pulveriger Recycling-Fraktion.

11. Verfahren nach Anspruch 8, dadurch **gekennzeichnet**, daß die Oberflächenbehandlung der pulverigen Recycling-Fraktion alternativ in indirekter Weise erfolgt durch die Verfahrens-Teilschritte:
d3) Lösen der Additive in Harzpaste;
e1) Einarbeiten der unbehandelten pulverigen Recycling-Fraktion in die die Additive enthaltende Harzpaste.

12. Verfahren nach einem der Ansprüche 1 bis 11, **gekennzeichnet** durch den Zusatz von Alkylarylsulfonaten und/oder Fettalkohol-Ethylenoxid-Addukten zur Harzpaste.

13. Verfahren nach einem der Ansprüche 1 bis 12, dadurch **gekennzeichnet**, daß die Einarbeitung der pulverigen Recycling-Fraktion und/oder die Zugabe der recyclierten Glasfasern in die Harzpaste bei erhöhter Temperatur von mindestens 35 Grad Celsius erfolgt.

14. Verfahren nach einem der Ansprüche 1 bis 13, dadurch **gekennzeichnet,** daß die Abfallteile zuerst zu kleinformatigen Bruchstücken vorzerkleinert werden.

15. Vorrichtung zur Herstellung einer duroplastischen Preßmasse aus Glasfaser-Polyester-Verbundwerkstoff, insbesondere SMC, BMC oder DMC, unter Verwendung von Abfallteilen aus verpreßtem SMC, BMC oder DMC, mit
a) einer Misch- und Rührstation (13) für die Zubereitung der Harzpaste;
b) einer Imprägnierstation (18) zur Einarbeitung der Glasfasern in die Harzpaste;
**gekennzeichnet** durch:
c) ein Schlagwerk (3), das die Glasfaser-Polyester-Verbundstruktur der Bruchstücke aufbricht;
d) eine Trennvorrichtung zum Absondern der rückgewonnenen Glasfasern von der pulverigen Recycling-Fraktion;
e) einen ersten Auffangbehälter (8) für die rückgewonnenen Glasfasern;
f) einen zweiten Auffangbehälter (12) für die pulverige Recycling-Fraktion;
g) eine erste Misch- und Dosiereinrichtung (6,7) zum Aufbringen von Schlichten auf die Oberfläche der rückgewonnenen Glasfasern;
h) eine zweite Misch- und Dosiereinrichtung (10,11) zum Zumischen von Netzmitteln zur pulverigen Recycling-Fraktion;
i) wenigstens eine, an der Misch- und Rührstation (13) und/ oder der Imprägnierstation (18) vorgesehene erste Zugabeeinrichtung (21) für die Zugabe von pulveriger Recycling-Fraktion;
k) eine an der Imprägnierstation (18) vorgesehene zweite Zugabeeinrichtung (22) für die Zugabe von recyclierten Glasfasern.

16. Vorrichtung nach Anspruch 15, dadurch **gekennzeichnet**, daß das Schlagwerk (3) eine Hammermühle ist.

17. Vorrichtung nach Anspruch 15 oder 16, **gekennzeichnet** durch einen an das Schlagwerk (3) anschließenden Magnetabscheider (4) zum Aussondern von Metallteilen.

18. Vorrichtung nach einem der Ansprüche 15 bis 17, dadurch **gekennzeichnet**, daß die Trennvorrichtung ein Rüttelsieb (5) ist.

19. Vorrichtung nach einem der Ansprüche 15 bis 18, **gekennzeichnet** durch eine an die Trennvorrichtung anschließende Feinmahlstufe (9) für die pulverige Recycling-Fraktion.

20. Vorrichtung nach einem der Ansprüche 15 bis 19, **ge- kennzeichnet** durch einen vor dem Schlagwerk (3) vorgesehenen Shredder (2) zum Vorzerkleinern der Abfallteile (1) in kleinformatige Bruchstücke.

21. Vorrichtung nach einem der Ansprüche 15 bis 20, dadurch **gekennzeichnet**, daß die zweite Misch- und Dosiereinrichtung umfaßt:
h1) einen ersten Mischer mit Dosierer zur Einarbeitung der Netzmittel in Original-Füllstoff;
h2) einen zweiten Mischer zur Vermischung des die Netzmittel enthaltenden Original-Füllstoffs mit pulveriger Recycling-Fraktion.

22. Vorrichtung nach einem der Ansprüche 15 bis 21, **gekennzeichnet** durch eine an der Misch- und Rührstation (13) vorgesehene Dosiereinrichtung (16) für die Zugabe von chemischen Zusätzen in die Harzpaste.

23. Vorrichtung nach einem der Ansprüche 15 bis 22, dadurch **gekennzeichnet**, daß die Imprägnierstation (18) im Bereich der Tränkzone mit einer Heizung (23) ausgerüstet ist.

24. Vorrichtung nach einem der Ansprüche 15 bis 23, dadurch **gekennzeichnet**, daß sie räumlich aufgeteilt ist in
- eine Wiederaufbereitungsanlage, umfassend Schlagwerk (3), Trennvorrichtung, ersten (8) und zweiten (12) Auffangbehälter sowie erste (6,7) und zweite (10,11) Misch- und Dosiereinrichtung; und in
- eine Produktionsanlage, umfassend Misch- und Rührstation (13), erste Zugabeeinrichtung (21) für pulverige Recycling-Fraktion, sowie Imprägnierstation (18) mit zweiter Dosier- und Zugabeeinrichtung (22) für recyclierte Glasfasern.

## Claims

1. Process for the production of a thermosetting moulding compound of glass fibre-polyester composite material, especially SMC, BMC or DMC, using waste parts made of pressed SMC, BMC or DMC, comprising the process steps:
a) breaking the waste parts, the glass fibre-polyester composite structure being broken up mechanically along the glass fibres;
b) separation into recovered glass fibres and pulverulent recycling fraction;
c) separate surface treatment of the recovered glass fibres by the application of sizes;
d) separate surface treatment of the pulverulent recycling fraction by the admixture of wetting agents;
e) incorporation into the resin paste of the pulverulent recycling fraction as recycling filler at least partially replacing the original filler;
f) addition of the recycled glass fibres as at least partial replacement of original glass fibres;
g) compression and homogenisation of the resulting mixture to form the desired moulding compound.

2. Process according to claim 1, characterised in that the separation into glass fibres and pulverulent recycling fraction is effected by screening.

3. Process according to claim 1 or 3, characterised by the additional fine grinding of the separated pulverulent recycling fraction to a particle size of less then 500 µm.

4. Process according to any one of claims 1 to 3, characterised in that the surface treatment of the recycled glass fibres is effected by the successive application of film-formers, lubricants and adhesion-imparting agents.

5. Process according to claim 4, characterised by the use of starch or plastics films as film-formers.

6. Process according to claim 4 or 5, characterised by the use of oils, fats or paraffins as lubricants.

7. Process according to any one of claims 4 to 6, characterised by the use of chromium complex salts or silanes as adhesion-imparting agents.

8. Process according to any one of claims 1 to 7, characterised in that the surface treatment of the pulverulent recycling fraction is effected by the admixture of one or more additives from one of the following groups of substances:
- methacrylic silanes;
- salts of unsaturated fatty acid polyamineamides;
- unsaturated polycarboxylic acids;
- polysiloxane copolymers.

9. Process according to claim 8, characterised in that the additives are temporarily dissolved in an organic solvent for the purpose of application.

10. Process according to claim 8 or 9, characterised by the surface treatment of the pulverulent recycling fraction in the successive partial process steps:
d1) addition of the wetting agents to new original filler;
d2) subsequent mixing of the original filler, containing the wetting agents, with untreated pulverulent recycling fraction.

11. Process according to claim 8, characterised in that the surface treatment of the pulverulent recycling fraction is alternatively effected indirectly by the partial process steps:
d3) dissolving the additives in resin paste;
e1) incorporation of the untreated pulverulent recycling fraction into the resin paste containing the additives.

12. Process according to any one of claims 1 to 11, characterised by the addition of alkylarylsulphonates and (or fatty alcohol(ethylene oxide adducts to the resin paste.

13. Process according to any one of claims 1 to 12, characterised in that the incorporation of the pulverulent recycling fraction and(or the addition of the recycled glass fibres into the resin paste are(is) effected at an elevated temperature of at least 35°C.

14. Process according to any one of claims 1 to 13, characterised in that the waste parts are first subjected to preliminary comminution to form small fragments.

15. Apparatus for the production of a thermosetting moulding compound of glass fibre-polyester composite material, especially SMC, BMC or DMC, using waste parts made of pressed SMC, BMC or DMC, having
a) a mixing and stirring station (13) for preparing the resin paste;
b) an impregnating station (18) for incorporating the glass fibres into the resin paste;
characterised by:
c) a breaking device (3) which breaks up the glass fibre-polyester composite structure of the fragments;
d) a separating device for separating the recovered glass fibres from the pulverulent recycling fraction;
e) a first collecting container (8) for the recovered glass fibres;
f) a second collecting container (12) for the pulverulent recycling fraction;
g) a first mixing and metering device (6,7) for the application of sizes to the surface of the recovered glass fibres;
h) a second mixing and metering device (10,11) for the admixture of wetting agents to the pulverulent recycling fraction;
i) at least one, first adding device (21), provided at the mixing and stirring station (13) and/or at the impregnating station (18), for the addition of pulverulent recycling fraction;
k) a second adding device (22), provided at the impregnating station (18), for the addition of recycled glass fibres.

16. Apparatus according to claim 15, characterised in that the breaking device (3) is a hammer mill.

17. Apparatus according to claim 15 or 16, characterised by a magnetic separator (4), adjacent to the breaking device (3), for separating out metal parts.

18. Apparatus according to any one of claims 15 to 17, characterised in that the separating device is a shaking screen (5).

19. Apparatus according to any one of claims 15 to 18, characterised by a fine-grinding stage (9), adjacent to the separating device, for the pulverulent recycling fraction.

20. Apparatus according to any one of claims 15 to 19, characterised by a shredder (2), provided upstream of the breaking device (3), for the preliminary comminution of the waste parts (1) into small fragments.

21. Apparatus according to any one of claims 15 to 20, characterised in that the second mixing and metering device comprises:
h1) a first mixer having a metering device for the incorporation of the wetting agents into original filler;
h2) a second mixer for mixing the original filler, containing the wetting agents, with pulverulent recycling fraction.

22. Apparatus according to any one of claims 15 to 21, characterised by a metering device (16), provided at the mixing and stirring station (13), for the addition of chemical additives to the resin paste.

23. Apparatus according to any one of claims 15 to 22, characterised in that the impregnating station (18) is equipped with a heating device (23) in the area of the steeping zone.

24. Apparatus according to any one of claims 15 to 23, characterised in that it is divided spatially into
- a reprocessing unit comprising the breaking device (3), the separating device, the first (8) and second (12) collecting container and the first (6,7) and second (10,11) mixing and metering device; and into
- a production unit comprising the mixing and stirring station (13), the first adding device (21) for pulverulent recycling fraction, and the impregnating station (18) having the second metering and adding device (22) for recycled glass fibres.

## Revendications

1. Procédé de fabrication d'une matière à mouler thermodurcissable composite en fibres de verre - polyester, SMC, BMC ou DMC notamment, en utilisant des déchets de SMC, BMC ou DMC moulé par compression, incluant les phases de procédé suivantes:
a) Broyage des déchets, la structure composite de fibres de verre - polyester étant rompue mécaniquement le long des fibres.
b) Séparation en fibres de verre récupérées et fraction de recyclage pulvérulente.
c) Traitement de surface distinct des fibres de verre récupérées par l'application d'ensimages.
d) Traitement de surface distinct de la fraction de recyclage pulvérulente par addition de mouillants.
e) Incorporation de la fraction de recyclage pulvérulente à la résine en pâte, en tant que charge de recyclage remplaçant, en partie du moins, la charge d'origine.
f) Addition des fibres de verre recyclées, en tant que produit de substitution, en partie du moins, des fibres de verre d'origine.
g) Compression et homogénéisation du mélange ainsi formé en une matière à mouler voulue.

2. Procédé suivant la revendication 1, caractérisé en ce que la séparation en fibres de verre et en fraction de recyclage pulvérulente est assurée par criblage.

3. Procédé suivant l'une des revendications 1 et 3, caractérisé par un broyage fin supplémentaire de la fraction de recyclage pulvérulente séparée, jusqu'à une grosseur de grain de moins de 500 micromètres.

4. Procédé suivant l'une quelconque des revendications 1 à 3, caractérisé en ce que le traitement de surface des fibres de verre recyclées est assuré par l'application successive de filmogènes, lubrifiants et adhésifs.

5. Procédé suivant la revendication 4, caractérisé par l'utilisation d'amidon ou de films de matière plastique comme filmogènes.

6. Procédé suivant l'une des revendications 4 et 5, caractérisé par l'utilisation d'huiles, de graisses ou de paraffines comme lubrifiants.

7. Procédé suivant l'une quelconque des revendications 4 à 6, caractérisé par l'utilisation de sels complexes de chrome ou de silanes comme adhésifs.

8. Procédé suivant l'une quelconque des revendications 1 à 7, caractérisé en ce que le traitement superficiel de la fraction de recyclage pulvérulente est assuré par addition d'un ou de plusieurs additifs de l'un des groupes de substances suivants:
- Méthacrylsilanes.
- Sels de polyaminamides d'acides gras insaturés.
- Acides polycarboxyliques insaturés.
- Copolymères de polysiloxane.

9. Procédé suivant la revendication 8, caractérisé en ce que les additifs, à des fins d'application, sont temporairement dissous dans un solvant organique.

10. Procédé suivant l'une des revendications 8 et 9, caractérisé par le traitement superficiel de la fraction de recyclage pulvérulente dans les phases de procédé successives:
d1) Addition des mouillants à la nouvelle charge d'origine.
d2) Mélange consécutif de la charge d'origine, comportant les mouillants, à la fraction de recyclage pulvérulente non traitée.

11. Procédé suivant la revendication 8, caractérisé en ce que le traitement superficiel de la fraction de recyclage pulvérulente est assuré en alternative, d'une manière indirecte, par les phases de procédé suivantes:
d3) Dissolution des additifs dans la résine en pâte.
e1) Incorporation de la fraction de recyclage pulvérulente non traitée à la résine en pâte, contenant les additifs.

12. Procédé suivant l'une quelconque des revendications 1 à 11, caractérisé par l'addition d'alcoylarylsulfonates et/ou d'adducts à base d'alcool gras - oxyde d'éthylène à la résine en pâte.

13. Procédé suivant l'une quelconque des revendications 1 à 12, caractérisé en ce que l'incorporation de la fraction de recyclage pulvérulente et/ou l'addition des fibres de verres recyclées à la résine en pâte s'effectuent à une température accrue de 35°C au moins.

14. Procédé suivant l'une quelconque des revendications 1 à 13, caractérisé en ce que les déchets sont d'abord réduits en fragments de format réduit.

15. Dispositif pour la fabrication d'une matière à mouler thermodurcissable composite en fibres de verre - polyester, SMC, BMC ou DMC notamment, en utilisant des déchets de SMC, BMC ou DMC moulé par compression, avec:
a) un poste de mélange et d'agitation (13) pour la préparation de la résine en pâte,
b) un poste d'imprégnation (18) pour l'incorporation des fibres de verre à la résine en pâte,
caractérisé par:
c) une machine à percussion (3), qui rompt la structure composite de fibres de verre - polyester des fragments,
d) un dispositif de séparation pour séparer les fibres de verre récupérées de la fraction de recyclage pulvérulente,
e) un premier bac collecteur (8) pour les fibres de verre récupérées,
f) un second bac collecteur (12) pour la fraction de recyclage pulvérulente,
g) un premier dispositif de mélange et de dosage (6, 7) pour l'application d'ensimages sur la surface des fibres de verre récupérées,
h) un second dispositif de mélange et de dosage (10, 11) pour l'addition de mouillants à la fraction de recyclage pulvérulente,
i) un premier dispositif d'addition (21) au moins, prévu sur le poste de mélange et d'agitation (13) et/ou sur le poste d'imprégnation (18), pour l'addition de la fraction de recyclage pulvérulente,
j) un second dispositif d'addition (22), prévu sur le poste d'imprégnation (18), pour l'addition des fibres de verre recyclées.

16. Dispositif suivant la revendication 15, caractérisé en ce que la machine à percussion (3) est un broyeur à marteaux.

17. Dispositif suivant l'une des revendications 15 et 16, caractérisé par un séparateur magnétique (4) en aval de la machine à percussion (3), pour le tri des parties métalliques.

18. Dispositif suivant l'une quelconque des revendications 15 à 17, caractérisé en ce que le dispositif de séparation est un crible vibrant (5).

19. Dispositif suivant l'une quelconque des revendications 15 à 18, caractérisé par un étage de broyage fin (9), en aval du dispositif de séparation, pour la fraction de recyclage pulvérulente.

20. Dispositif suivant l'une quelconque des revendications 15 à 19, caractérisé par un déchiqueteur (2), prévu en amont de la machine à percussion (3), pour réduire les déchets (1) en fragments de format réduit.

21. Dispositif suivant l'une quelconque des revendications 15 à 20, caractérisé en ce que le second dispositif de mélange et de dosage inclut:
h1) un premier mélangeur, avec doseur, pour l'incorporation des mouillants à la charge d'origine,
h2) un second mélangeur pour le mélange de la charge d'origine, contenant les mouillants, à la fraction de recyclage pulvérulente.

22. Dispositif suivant l'une quelconque des revendications 15 à 21, caractérisé par un dispositif de dosage (16), prévu sur le poste de mélange et d'agitation (13), pour l'ajout d'additifs chimiques à la résine en pâte.

23. Dispositif suivant l'une quelconque des revendications 15 à 22, caractérisé en ce que le poste d'imprégnation (18) est équipé d'un chauffage (23) dans la zone d'imprégnation.

24. Dispositif suivant l'une quelconque des revendications 15 à 23, caractérisé par une subdivision spatiale en:
- une installation de retraitement, incluant la machine à percussion (3), le dispositif de séparation, le premier (8) et le second (12) bac collecteur, ainsi que le premier (6, 7) et le second (10, 11) dispositif de mélange et de dosage, et en
- une installation de production, englobant le poste de mélange et d'agitation (13), le premier dispositif d'addition (21) pour la fraction de recyclage pulvérulente, ainsi que le poste d'imprégnation (18) avec le second dispositif de dosage et d'addition (22) pour les fibres de verre recyclées.
